# EUROPEAN PATENT APPLICATION

(11) **EP 4 717 507 A1**
(43) Date of publication of application: **01.04.2026**
(21) Application number: 23938463.9
(22) Date of filing: 23.05.2023
(51) Int. Cl.: B60L 7/16, B60L 9/18

(54) **ELECTRICALLY DRIVEN VEHICLE**

(71) Applicant: Hitachi Industrial Products, Ltd., Tokyo 101-0021 (JP)
(72) Inventor: KIKUCHI, Akira, Tokyo 100-8280 (JP); FURUKAWA, Isao, Tokyo 101-0021 (JP); HIGASHIMATA, Itaru, Tokyo 101-0021 (JP); AMEMIYA, Yoshiki, Tokyo 101-0021 (JP)
(74) Representative: MERH-IP Matias Erny Reichl Hoffmann Patentanwälte PartG mbB
(86) International application number: PCT/JP2023/019169
(87) International publication number: WO 2024/241497

(57) **Abstract**

The electric drive vehicle includes a battery, a DC/DC converter that uses the output voltage of the battery as input, an inverter that drives the electric motor using the voltage output by the DC/DC converter or the voltage output by the overhead line as input, and a brake chopper apparatus that includes a switching element, a resistance and a diode, which is connected to the DC side of the inverter. The electric drive vehicle switches the conditions under which the switching element operates when the electric drive vehicle is connected to the overhead line and when the electric drive vehicle is not connected to the overhead line.

## Description

### Technical Field

This invention relates to an electric drive vehicle.

### Background Art

It is known electric drive vehicle drive on electric power supplied via a power collecting device such as a pantograph in sections where an overhead line is installed, and drive on electric power stored in a battery that is mounted on the vehicle, on sections where no overhead line is installed. In such vehicles, the regenerative electric power generated when braking operation is performed is stored in the battery mounted on the vehicle, or is stored an electrical storage facility in ground via the overhead line, or is supplied to other vehicles driving via the overhead line.

With regard to electric drive vehicles, Patent Literature 1 is known. In the Patent Literature 1, it is disclosed that technology improves the regenerative efficiency and the accuracy of the stopping position of ATO vehicles, by securing a supply destination of regenerative electric power when electric brakes are used, controlling the load amount of the onboard load equipment and maintaining the overhead line voltage at a value suitable for regenerative operation. Citation List

### Patent Literature

Patent Literature 1: Japanese Unexamined Patent Application Publication No. 2013-70611

### Summary of Invention

### Technical Problem

In Patent Literature 1, as mentioned above, issues such as improving regenerative efficiency can be solved. However, problems such as the increase of the overhead line voltage occur when regenerative electric power is supplied to the overhead line when there is no electrical storage facility on the ground or when there are no other vehicles driving on the overhead line. It is considered that Patent Literature 1 does not sufficiently take such problems into consideration. In addition, when regenerating while driving on a section where the overhead line is not laid, the problem that the DC voltage of the inverter that drives the vehicle also increase, may be occur.

To solve the above problems, it is considered necessary to absorb all the regenerative electric power generated by the battery installed in the vehicle. However, depending on such as the state of charge of the battery, it may not be possible to absorb all the regenerative electric power with the battery installed in the vehicle. When excess power is generated that cannot be fully absorbed by the batteries, reverse power flow to the overhead line occurs in sections where the overhead line is installed, and the DC voltage of the inverter that drives the vehicle rises in the section where the overhead line is not laid.

Therefore, there is a problem that to suppress the adverse effects based on reverse power flow caused by the regenerative electric power generated when the electric drive vehicle performs to braking operation, and to suppress the increase in DC voltage of the inverter that drives the vehicle. Solution to Problem

According to a first aspect of the present invention, an electric drive vehicle described below is provided. The electric drive vehicle includes a buttery, a DC/DC converter that uses the output voltage of the battery as input, an inverter that drives the electric motor using the voltage output from the DC/DC converter or the voltage output from the overhead line as input, and a brake chopper apparatus including a switching element, a resistance, and a diode, which is connected to the DC side of the inverter. And, the electric drive vehicle switches the conditions under which the switching element operates when the electric drive vehicle is connected to the overhead line and when the electric drive vehicle is not connected to the overhead line.

According to a second aspect of the present invention, an electric drive vehicle described below is provided. The electric drive vehicle includes an electric generator, an AC/DC converter that uses the output voltage of the electric generator as input, an inverter that drives the electric motor using the voltage output from the AC/DC converter or the voltage output from the overhead line as input, and a brake chopper apparatus including a switching element, a resistance, and a diode, which is connected to the DC side of the inverter. And, the electric drive vehicle switches the conditions under which the switching element operates when the electric drive vehicle is connected to the overhead line and when the electric drive vehicle is not connected to the overhead line. Advantageous Effects of Invention

According to the present invention, it is possible to suppress adverse effects based on reverse power flow caused by the regenerative electric power generated when the electric drive vehicle performs braking operations, and suppress the increase in the DC voltage of the inverter that drives the vehicle. Note that, issues, configurations, and effects other than those described above will be clarified in the following description of embodiments for implementing the invention.

### Brief Description of Drawings

FIG. 1 shows an example configuration of an electric drive vehicle with respect to the first embodiment.
FIG. 2 shows an example configuration of a brake chopper apparatus.
FIG. 3 shows an example of the configuration of the controller of the first embodiment.
FIG. 4 shows an example of the configuration of the chopper controller of the first embodiment.
FIG. 5 shows an example of the operating waveform in battery drive mode of the first embodiment.
FIG. 6 shows an example of the operating waveform of the first embodiment in trolley drive mode.
FIG. 7 shows an example of the configuration of the electric drive vehicle with respect to the second embodiment.
FIG. 8 shows an example of the configuration of the controller of the second embodiment.
FIG. 9 shows an example of the configuration of the chopper controller of the second embodiment.
FIG. 10 shows an example of the operating waveform of the second embodiment in trolley drive mode.
FIG. 11 shows an example of the operating waveform of the second embodiment in trolley drive mode.
FIG. 12 shows an example of the configuration of an electric drive vehicle with respect to the third embodiment.
FIG. 13 shows an example of the configuration of an electric drive vehicle with respect to the fourth embodiment. Description of Embodiments

Hereinafter, embodiments of the invention will be described with reference to the drawings. The embodiments are illustrative examples to explain the invention, and have been omitted and simplified as appropriate for the sake of clarity of explanation. The invention can also be implemented in various other forms. Unless otherwise limited, each configuration element may be singular or plural.

The location, size, shape, extent, etc. of each configuration element shown in the drawings may not represent the actual location, size, shape, extent, etc., in order to facilitate understanding of the invention. Therefore, the invention is not necessarily limited to the location, size, shape, extent, etc. disclosed in the drawings. When there are multiple configuration elements having the same or similar functions, the same sign may be described with different subscripts. Also, when there is no need to distinguish between these multiple configuration elements, subscripts may be omitted and explained.

Hereinafter, an embodiment of an electric drive vehicle according to the present invention will be described with reference to the drawings. An electric drive vehicle is a vehicle that drives by being supplied with electric power. In the embodiment, as an example, a technique is described that the reverse power flow to the overhead line caused by the regenerative electric power generated when the electric drive vehicle performs braking operation and the increase of DC voltage of the inverter that drives the vehicle are suppressed.

### < First embodiment>

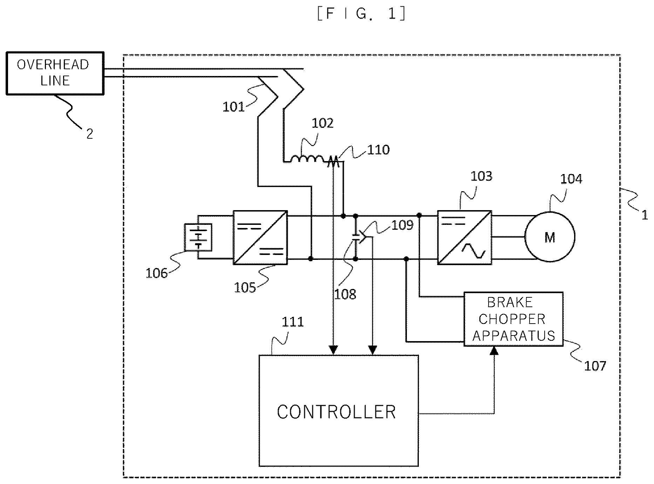

Figure 1 shows an example of an electric drive vehicle configuration with respect to the first embodiment. The electric drive vehicle 1 in this embodiment includes a pantograph 101, a reactor 102, an inverter 103, an electric motor 104, a DC/DC converter 105, a battery 106, a brake chopper apparatus 107, smoothing condenser 108, voltage sensor 109, current sensor 110, and controller 111.

When electric drive vehicle 1 drives on a section where overhead line 2, which supplies DC voltage, is laid, pantograph 101 is connected to overhead line 2, and DC power supplied to electric drive vehicle 1 from overhead line 2 is supplied to the DC side of the inverter 103 through the pantograph 101 and the reactor 102. Then, inverter 103 converts the DC power into three-phase alternating current power, and the three-phase alternating current power is supplied from the AC side of inverter 103 to electric motor 104. By electric motor 104 is driven by the three-phase alternating current power, the electric drive vehicle 1 drives. The DC voltage of the inverter 103 becomes approximately equal to the DC voltage of the overhead line 2, and the DC voltage of the inverter 103 is maintained by the overhead line 2. DC/DC converter 105 operates in power control mode to control the charge and discharge power of battery 106. DC/DC converter 105 normally charges the battery 106 at a constant current to prepare for future drives on sections where the overhead line 2 is not laid, and charges the battery 106 at a constant voltage when the battery 106 approaches full charge.

On the other hand, when the electric drive vehicle 1 drives on the section where the overhead line 2 is not laid, the DC/DC converter 105 supplies the electric energy stored in the battery 106 as DC power to the DC side of the inverter 103. Inverter 103 converts the DC power into three-phase alternating current power, and the three-phase alternating current power is supplied from the AC side of inverter 103 to electric motor 104. By the electric motor 104 is driven by the three-phase alternating current power, the electric drive vehicle 1 drives. The DC/DC converter 105 operates in the voltage control mode to control the DC voltage of the inverter 103 in order to maintain the DC voltage of the inverter 103 at a predetermined value. That is, the DC/DC converter 105 charges and discharges the battery 106 to maintain the DC voltage of the inverter 103.

The brake chopper apparatus 107 is connected to the DC side of the inverter 103 and is an apparatus for discharging electrical energy stored in the DC side of the inverter 103. The brake chopper apparatus 107 operates upon receiving a gate pulse signal from a controller 111, which will be described later.

The smoothing condenser 108 is connected to the DC side of the inverter 103, and the DC voltage sensor 109 detects the DC voltage of the inverter 103.

The current sensor 110 is connected in series with the reactor 102 and detects the current flowing in the reactor 102. Note that, in the following, the direction of the current flowing from reactor 102 to direction of overhead line 2 is positive.

Controller 111 outputs a gate pulse signal to the brake chopper apparatus 107 using the voltage detection value detected by voltage sensor 109 and the current detection value detected by current sensor 110 as inputs. Note that, only the controller 111 that controls the brake chopper apparatus 107 is shown in this embodiment. In reality, controllers that control inverter 103 and DC/DC converter 105 are also necessary, but the description is omitted in this embodiment.

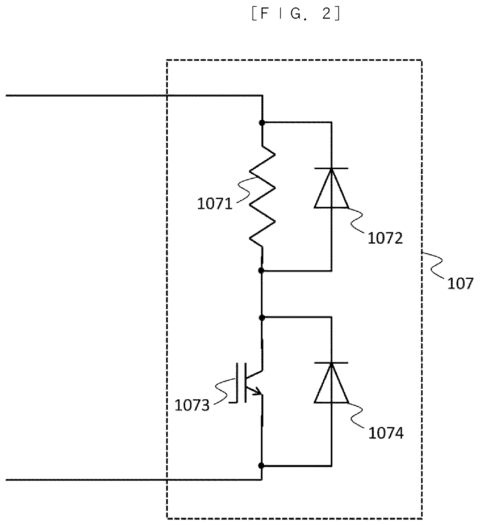

Figure 2 shows an example configuration of a brake chopper apparatus 107. Brake chopper apparatus 107 includes a resistance 1071, a diode 1072, a switching element 1073 such as an IGBT (Insulated Gate Bipolar Transistor), and a diode 1074. The resistance 1071 and switching element 1073 are connected in series, and the diodes 1072 and 1074 are connected in inverse parallel to the resistance 1071 and switching element 1073, respectively. By switching element 1073 receives a gate pulse signal from controller 111 and conducts, current flows through resistance 1071, and discharging the electrical energy stored in the DC side of inverter 103 is performed.

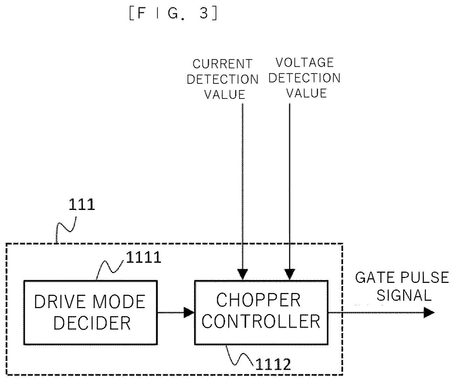

Figure 3 shows an example configuration of controller 111. controller 111 includes a drive mode decider 1111 and a chopper controller 1112. The drive mode decider 111 determines whether a mode in which the electric drive vehicle 1 connects to the overhead line 2 and drives while exchanging electric power with the overhead line 2 (hereinafter referred to as trolley drive mode), or a mode in which the electric drive vehicle 1 does not connect to the overhead line 2 and drives by charging and discharging the electrical energy stored in the battery 106 (hereinafter referred to as battery drive mode), and outputs the determining result. The chopper controller1112 outputs a gate pulse signal to the brake chopper apparatus 107 using the determining result output by the drive mode decider 1111, the voltage detection value detected by the voltage sensor 109, and the current detection value detected by the current sensor 110 as inputs.

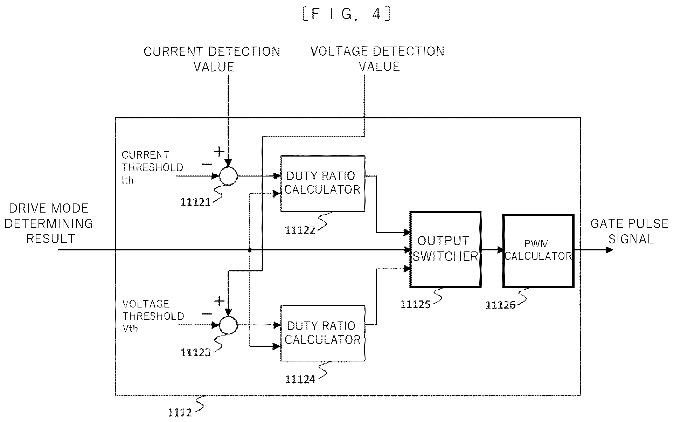

Figure 4 shows an example of the configuration of the chopper controller 1112. The chopper controller 1112 includes a subtractor 11121, a duty ratio calculator 11122, a subtractor 11123, a duty ratio calculator 11124, and an output switcher 11125, and PWM calculator 11126.

Subtractor 11121 outputs a value that subtracting the current threshold Ith from the current detection value output by current sensor 110. Here, the current threshold Ith is the target upper limit value of current reverses power flow to the overhead line 2 and is a positive value.

The duty ratio calculator 11122 calculates the duty ratio that serves as a command to turn switching element 1073 on and off, calculation value output by subtractor 11121 and the drive mode determining result output by drive mode decider 1111 as input. The duty ratio output by duty ratio calculator 11122 is limited within the range of 0 to 1. The duty ratio calculator 11122 is configured for example with proportional integral control. If the drive mode determining result output by the drive mode decider 1111 is trolley drive mode, the duty ratio calculator 11122 performs a calculation and outputs the result of the calculation as the duty ratio. On the other hand, if the drive mode determining result output by the drive mode decider 1111 is battery drive mode, the duty ratio calculator 1112 stops the calculation and outputs 0 as the duty ratio.

Subtractor 11123 outputs value that subtracts the voltage threshold Vth from the voltage detection value output by voltage sensor 109. Here, the voltage threshold Vth is the target upper limit value of DC voltage of inverter 103 and is a positive value.

The duty ratio calculator 11124 calculates the duty ratio that serves as a command to turn switching element 1073 on and off, calculation value output by subtractor 11123 and the drive mode determining result output by drive mode decider 1111 as input. The duty ratio output by duty ratio calculator 11124 is limited within the range of 0 to 1. The duty ratio calculator 11124 is configured for example with proportional integral control. If the drive mode determining result output by the drive mode decider 1111 is battery drive mode, the duty ratio calculator 11124 performs a calculation and outputs the result of the calculation as the duty ratio. On the other hand, if the drive mode determining result output by the drive mode decider 1111 is trolley drive mode, the duty ratio calculator 1112 stops the calculation and outputs 0 as the duty ratio.

The output switcher 11125, the duty ratio output by the duty ratio calculator 11122, the drive mode determining result output by the drive mode decider 1111, and the duty ratio output by the duty ratio calculator 11124 as input, outputs the duty ratio output by duty ratio calculator 11122 when the drive mode determining result is trolley drive mode, and outputs the duty ratio output by duty ratio calculator 11124 when the drive mode determining result is battery drive mode.

PWM calculator 11126, the duty ratio output by output switcher 11125 as input, performs a comparison of the duty ratio and carrier signal, and outputs a gate pulse signal to switching element 1073.

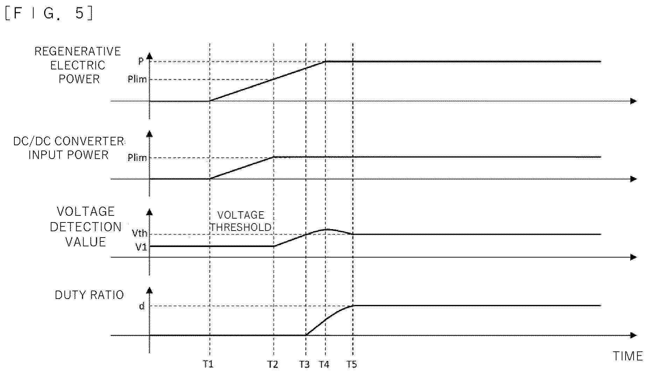

Figure 5 shows an example of the operating waveform in battery drive mode in the first embodiment. In battery drive mode, the DC/DC converter 105 operates in voltage control mode to control the DC voltage of inverter 103, and the DC voltage of inverter 103 is normally controlled to V1.

Next, when inverter 103 starts regenerative operation from time T1, the regenerative electric power regenerated in the DC side of inverter 103 starts to increase. Since DC/DC converter 105 controls so that DC voltage of inverter 103 to V1, the regenerative electric power regenerated on the DC side of inverter 103 is input to the DC/DC converter 105 and charged to the battery 106. Therefore, as the regenerative electric power regenerated on the DC side of inverter 103 increases, the input power of DC/DC converter 105 also increases accordingly.

Next, at time T2, the input power of the DC/DC converter 105 is subject to some limit and it is assumed that the input power of the DC/DC converter 105 is constant at Plim. However, since the regenerative electric power regenerated on the DC side of inverter 103 is increasing, the difference power between the regenerative electric power and the input power of DC/DC converter 105 is generated, and this power is stored in the DC side of inverter103. Therefore, the DC voltage of inverter 103 begins to increase, and the voltage detection value detected by the voltage sensor 109 begins to increase.

Next, at time T3, when the voltage detection value of the DC voltage of inverter 103 exceeds the voltage threshold Vth, since the calculated value output by subtractor 11123 becomes positive, the duty ratio output by duty ratio calculator 11124 begins to increase from 0. In battery drive mode, the gate pulse signal to switching element 1073 is created from the duty ratio output by duty ratio calculator11124 via output switcher11125 and PWM calculator 11126. Therefore, as the duty ratio output by the duty ratio calculator 11124 increases, the power discharged by the brake chopper apparatus 107 increases, and the increase in DC voltage of inverter 103 begins to be suppressed.

Next, at time T4, the increase in the regenerative electric power regenerated on the DC side of inverter 103 stops and the regenerative electric power becomes constant at P. The increase in the DC voltage of inverter 103 is further suppressed by the stop of the increase in the regenerative electric power, and the DC voltage of inverter 103 begins to decrease as the duty ratio output by the duty ratio calculator 11124 increases.

Next, at time T5, the voltage detection value of the DC voltage of inverter 103 matches the voltage threshold Vth, and the duty ratio output by duty ratio calculator 11124 becomes constant at d. At this time, P - Plim, which is the difference power between the regenerated power P on the DC side of inverter 103 and the input power Plim of the DC/DC converter 105, is consumed by the brake chopper apparatus 107.

As described above, in battery drive mode, the DC voltage of inverter 103 can be suppressed below the voltage threshold Vth by discharging the brake chopper apparatus 107 as the DC voltage of inverter 103 increases.

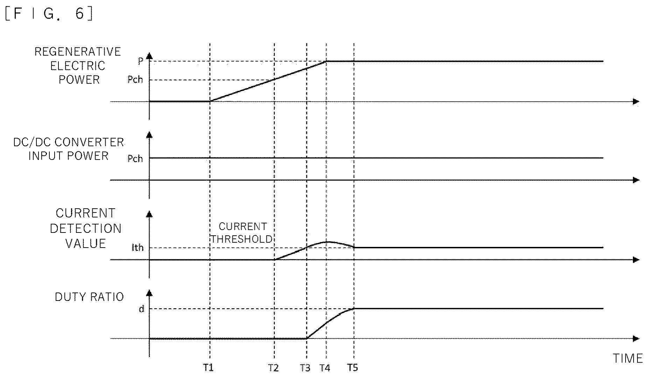

Figure 6 shows an example of the operating waveform in trolley drive mode in the first embodiment. In trolley drive mode, the DC/DC converter 105 operates in power control mode to control the charging and discharging power of the battery 106, and the input power of the DC/DC converter 105 is controlled to Pch.

Next, when inverter 103 starts regenerative operation from time T1, the regenerative electric power regenerated on the DC side of inverter 103 starts to increase. The DC/DC converter 105 controls so that the input power of the DC/DC converter 105 to Pch. Therefore, by the power that is insufficient with only the regenerative power regenerated to the DC side of the inverter 103 is supplied from the overhead line 2, the total Pch power of the regenerative electric power regenerated on the DC side of inverter 103 and the power received from the overhead line 2, is inputted to the DC/DC converter 105, and the battery 106 is charged.

Next, at time T2, when the regenerative electric power regenerated on the DC side of inverter 103 exceeds Pch, the difference power between the regenerative electric power and the input power of DC/DC converter 105 is generated, this power is reverse power flowed to the overhead line 2 through the reactor 102 and pantograph 101. Therefore, the current flowing in reactor 102 begins to rise, and the current detection value detected by current sensor 110 begins to rise.

Next, at time T3, when the current detection value of the current flowing in reactor 102 exceeds the current threshold Ith, since the calculated value output by subtractor 11121 becomes positive, the duty ratio output by duty ratio calculator 11122 begins to increase from 0. In trolley drive mode, the gate pulse signal to switching element 1073 is created from the duty ratio output by duty ratio calculator 11122 via output switcher 11125 and PWM calculator 11126. Therefore, as the duty ratio output by the duty ratio calculator 11122 increases, the power discharged by the brake chopper apparatus 107 increases, and the increase in the current flowing through the reactor 102 begins to be suppressed.

Next, at time T4, the increase in regenerative electric power regenerated on the DC side of inverter 103 stops and the regenerative electric power becomes constant at P. The increase in the current flowing in the reactor 102 is further suppressed by the stop of the increase in the regenerative electric power, and the current flowing in the reactor 102 begins to decrease as the duty ratio output by the duty ratio calculator 11122 is increased.

Next, at time T5, the current detection value of the current flowing in reactor 102 matches the current threshold Ith, and the duty ratio output by duty ratio calculator 11122 becomes constant at d. At this time, P - Pch, which is the power difference between the power P regenerated on the DC side of inverter 103 and the input power Pch of the DC/DC converter 105, is consumed by the brake chopper apparatus 107.

As described above, in trolley drive mode, the current flowing in the reactor 102 can be suppressed below the current threshold Ith by discharging the brake chopper apparatus 107 as the current flowing in the reactor 102 rises.

### < Second Embodiment>

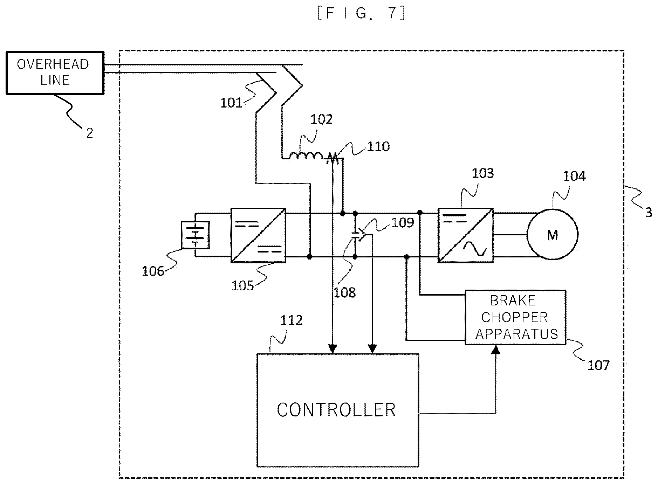

Next, the second embodiment will be described. Content similar to that already explained may be omitted. Figure 7 shows an example of the configuration of the electric drive vehicle 3 with respect to the second embodiment. The difference from the example configuration of the first embodiment shown in Fig. 1 is that controller 112 is provided instead of controller 111, and the configuration examples of the first and second embodiments are identical configuration except for this point. Note that, the differences between controller 111 and controller 112 are described below.

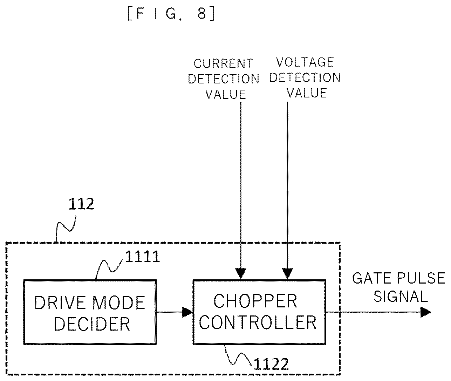

Figure 8 shows an example configuration of controller 112. Controller 112 includes a drive mode decider 1111 and a chopper controller 1122. The difference between controller 111 and controller 112 shown in Figure 3 is that including a chopper controller 1122 instead of a chopper controller 1112, controller 111 and controller 112 are identical configuration except for this point. The differences between the chopper controller 1112 and the chopper controller 1122 are described below.

The drive mode decider 1111 determines whether trolley drive mode or battery drive mode, and outputs the result of that determination. The chopper controller 1122 outputs gate pulse signals to the brake chopper apparatus 107, the determining result output by the drive mode decider 1111, the voltage detection value detected by the voltage sensor 109, and the current detection value detected by the current sensor 110 as inputs.

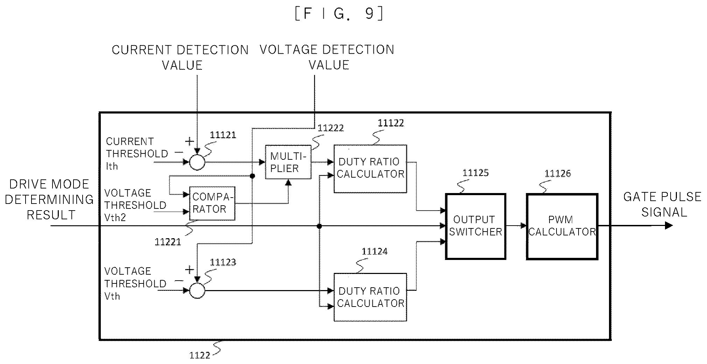

Figure 9 shows the configuration of the chopper controller1122. Chopper controller 1122 includes a subtractor 11121, a duty ratio calculator 11122, a subtractor 11123, a duty ratio calculator 11124, output switcher 11125, PWM calculator 11126, comparator 11221, and multiplier 11222. A comparator 11221 and a multiplier 11222 are additionally provided, to the configuration of the chopper controller 1112 shown in the figure 4.

Subtractor 11121 outputs value that subtracts the current threshold Ith from the current detection value output by current sensor 110. Here, the current threshold Ith is the target upper limit value of current reverses power flow to the overhead line 2 and is a positive value.

The comparator 11221 compares the voltage detection value detected by the voltage sensor 109 with the voltage threshold Vth2, and outputs 1 when the voltage detection value exceeds the voltage threshold Vth2, and 0 when it does not exceed. Here, Vth2 is the upper limit of the voltage that the electric drive vehicle 3 can receive from the trolley overhead line 2, and is a positive value.

Multiplier 11222 outputs the value multiplying the calculated value output by subtractor 11121 with the calculated value output by comparator 11221.

The duty ratio calculator 11122 calculates the duty ratio that is the command to turn the switching element 1073 on and off, the calculated value output by multiplier 11222 and the drive mode determining result output by drive mode decider 1111 as input. The duty ratio output by duty ratio calculator 11122 is limited within the range of 0 to 1. The duty ratio calculator 11122 is configured of a proportional integral control, for example. When the drive mode determining result output by drive mode decider 1111 is trolley drive mode, duty ratio calculator 11122 performs a calculation and outputs the result of the calculation as the duty ratio. On the other hand, when the drive mode determining result output by the drive mode decider 1111 is battery drive mode, the duty ratio calculator 11122 stops the calculation and outputs 0 as the duty ratio.

Subtractor 11123 outputs the value that subtracts the voltage threshold Vth from the voltage detection value output by voltage sensor 109. Here, the voltage threshold Vth is the target upper limit value of DC voltage of inverter103 and is a positive value.

The duty ratio calculator 11124 calculates the duty ratio that serves as a command to turn the switching element 1073 on and off, the calculated value output by subtractor 11123 and the drive mode determining result output by drive mode decider 1111 as input. The duty ratio output by duty ratio calculator 11124 is limited within the range of 0 to 1. The duty ratio calculator 11124 is configured of a proportional integral control, for example. When the drive mode determining result output by the drive mode decider 1111 is battery drive mode, the duty ratio calculator 11124 performs a calculation and outputs the calculation result as the duty ratio. On the other hand, when the drive mode determining result output by the drive mode decider 1111 is trolley drive mode, the duty ratio calculator 11124 stops the calculation and outputs 0 as the duty ratio.

The output switcher 11125, the duty ratio output by the duty ratio calculator 11122, the drive mode determining result output by the drive mode decider 1111, and the duty ratio output by the duty ratio calculator 11124 as input, outputs duty ratio of the duty ratio calculator 11122 when the drive mode determining result is trolley drive mode, outputs duty ratio of the duty ratio calculator 11124 when the drive mode determining result is battery drive mode.

The PWM calculator 11126, the duty ratio output by the output switcher 11125 as input, performs a comparison of the duty ratio and carrier signal, and outputs a gate pulse signal to the switching element 1073.

Here, in the second embodiment, comparator 11221 and multiplier 11222 are additionally provided for the following reasons. In the first embodiment, when the current flowing in the reactor 102 exceeds the current threshold Ith, the current flowing in the reactor 102 is suppressed below the current threshold Ith by discharging in the brake chopper apparatus 107, it suppresses the reverse power flow from the electric drive vehicle 1 to the overhead line 2. This is because if there is no load consuming power or storage system storing power beyond the overhead line 2, the reverse power flow may cause the voltage of the overhead line 2 to rise, which may cause failure etc., of equipment connected to the overhead line 2.

However, if there is a load that consumes power or an energy storage system that stores power beyond the overhead line 2, supplying the power that was to be discharged to that load or energy storage system, will result in more effective use of power, rather than discharging it at the brake chopper apparatus107. Even if reverse power flow occurs, if the reverse power flowed power is supplied to the load or storage system, the voltage of overhead line 2 does not increase, and therefore the DC voltage of inverter 103 does not increase either.

Therefore, in the second embodiment, it includes comparator 11221 and multiplier 11222 to allow reverse power flow to overhead line 2 as long as the DC voltage of inverter 103 does not increase. In other words, by the comparator 11221 determines whether the DC voltage of inverter 103 exceeds the voltage threshold Vth2, and if the DC voltage of inverter 103 does not exceed the voltage threshold Vth2, the output of multiplier 11222 remains 0, the output of duty ratio calculator 11122 remains 0, and the discharge of brake chopper apparatus 107 is suppressed.

As described above, in the second embodiment, if there is a load that consumes power or an energy storage system that stores power beyond the overhead line 2, power can be supplied to them, thus enabling effective use of power.

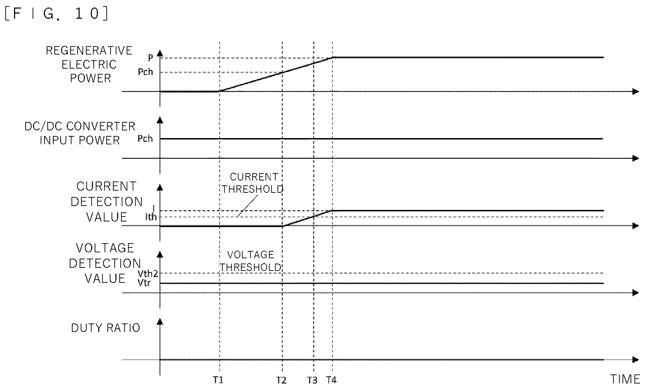

Figure 10 shows an example of the operating waveform in trolley drive mode in the second embodiment. Note that, in the second embodiment, the example of the operation waveform in battery drive mode is the same as the example of the operation waveform in battery drive mode in the first embodiment shown at in Fig. 5, so the explanation of the battery drive mode in the second embodiment is omitted.

In trolley drive mode, the DC/DC converter 105 operates in power control mode to control the charging and discharging power of the battery 106, and the input power of the DC/DC converter 105 is controlled to Pch.

Next, when inverter 103 starts regenerative operation from time T1, the regenerative electric power regenerated on the DC side of inverter 103 starts to increase. The DC/DC converter 105 controls so that the input power of the DC/DC converter 105 to Pch. Therefore, by the power that is insufficient with only the regenerative power regenerated to the DC side of the inverter 103 is supplied from the overhead line 2, the total Pch power of the regenerative electric power regenerated on the DC side of inverter 103 and the power received from the overhead line 2, is inputted to the DC/DC converter 105, and the battery 106 is charged.

Next, at time T2, when the regenerative electric power regenerated on the DC side of inverter 103 exceeds Pch, the difference power between the regenerative electric power and the input power of DC/DC converter 105 is generated, this power is reverse power flowed to the overhead line 2 through the reactor 102 and pantograph 101. Therefore, the current flowing in reactor 102 begins to rise, and the current detection value detected by current sensor 110 begins to rise. However, if there is a load consuming power or an energy storage system storing power beyond the overhead line 2, the voltage of the overhead line 2 does not rise and the DC voltage of inverter 103 maintains Vtr, which is the voltage of the overhead line 2.

Next, at time T3, when the current detection value of the current flowing in reactor 102 exceeds the current threshold Ith, the calculated value output by subtractor 11121 becomes positive, but the voltage detection value of the DC voltage inverter 103 does not exceed the voltage threshold Vth2 and maintains Vtr, which is the voltage of overhead line 2. Therefore, the output of comparator 11221 is 0 and the output of multiplier 11222 is 0, so the duty ratio output by duty ratio calculator 11122 remains 0. In trolley drive mode, the gate pulse signal to switching element 1073 is created from the duty ratio output by duty ratio calculator 11122 via output switcher 11125 and PWM calculator 11126. Therefore, if the duty ratio output by the duty ratio calculator 11122 remains 0, the power discharged by the brake chopper apparatus 107 remains 0, and the current flowing through reactor 102 continues to increase as the regenerative electric power regenerated on the DC side of inverter 103 increases.

Next, at time T4, the increase in the regenerative electric power regenerated on the DC side of inverter 103 stops and the regenerative electric power becomes constant at P. The increase in the regenerative electric power stops, and the increase in the current flowing through the reactor 102 stops.

As described above, in trolley drive mode, if there is a load that consumes power or an energy storage system that stores power beyond the overhead line 2, it is possible to supply the power to the load or the energy storage system, without discharging the brake chopper apparatus 107 and without suppressing the current flowing through the reactor 102.

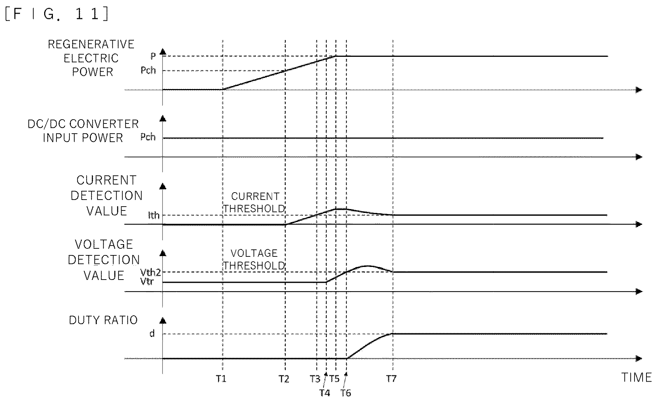

Figure 11 shows another example of operating waveforms in trolley drive mode in the second embodiment. In trolley drive mode, the DC/DC converter 105 operates in power control mode to control the charging and discharging power of the battery 106, and the input power of the DC/DC converter 105 is controlled to Pch.

Next, when inverter 103 starts regenerative operation from time T1, the regenerative electric power regenerated on the DC side of inverter 103 starts to increase. The DC/DC converter 105 controls so that the input power of the DC/DC converter 105 to Pch. Therefore, by the power that is insufficient with only the regenerative power regenerated to the DC side of the inverter 103 is supplied from the overhead line 2, the total Pch power of the regenerative electric power regenerated on the DC side of inverter 103 and the power received from the overhead line 2, is inputted to the DC/DC converter 105, and the battery 106 is charged.

Next, at time T2, when the regenerative electric power regenerated on the DC side of inverter 103 exceeds Pch, the difference power between the regenerative electric power and the input power of DC/DC converter 105 is generated, this power is reverse power flowed to the overhead line 2 through the reactor 102 and pantograph 101. Therefore, the current flowing in reactor 102 begins to rise, and the current detection value detected by current sensor 110 begins to rise.

Next, at time T3, when the current detection value of the current flowing in reactor 102 exceeds the current threshold Ith, the calculated value output by subtractor 11121 becomes positive, but the DC voltage of inverter 103 does not exceed the voltage threshold Vth2 and maintains Vtr, which is the voltage of overhead line 2. Therefore, the output of comparator 11221 is 0 and the output of multiplier 11222 is 0, so the duty ratio output by duty ratio calculator 11122 remains 0. In trolley drive mode, the gate pulse signal to switching element 1073 is created from the duty ratio output by duty ratio calculator 11122 via output switcher 11125 and PWM calculator 11126. Therefore, if the duty ratio output by the duty ratio calculator 11122 remains 0, the power discharged by the brake chopper apparatus 107 remains 0, and the current flowing through reactor 102 continues to increase as the regenerative electric power regenerated on the DC side of inverter 103 increases.

Next, at time T4, the voltage on overhead line 2 begins to rise from Vtr, and the DC voltage of inverter 103 also begins to rise.

At time T5, the increasing in regenerative electric power regenerated on the DC side of inverter 103 stops and the regenerative electric power becomes constant at P. By the increase in the regenerative electric power stops, the increase in the current flowing through the reactor 102 stops.

However, the voltage on overhead line 2 continues to increase, and if the DC voltage of inverter 103 exceeds the voltage threshold Vth2 at time T6, the output of comparator 11221 becomes 1 and the calculated value output by multiplier 11222 becomes positive. Therefore, the duty ratio output by duty ratio calculator 11122 begins to increase from 0. In trolley drive mode, the gate pulse signal of switching element 1073 is created from the duty ratio output by duty ratio calculator 11122 via output switcher 11125 and PWM calculator 11126. Therefore, as the duty ratio output by duty ratio calculator 11122 increases, the power discharged in brake chopper apparatus 107 increases, the current flowing in reactor 102 begins to decrease, the voltage increase in overhead line 2 begins to be suppressed, and the increase in the DC voltage of inverter 103 also begins to be suppressed.

Next, at time T7, the current detection value of the current flowing in reactor 102 matches the current threshold Ith, the voltage detection value of the DC voltage of inverter 103 matches the voltage threshold Vth2, and the duty ratio output by calculator 11122 is constant at d. At this time, P - Pch, which is the power difference between the regenerated power P on the DC side of inverter 103 and the input power Pch of the DC/DC converter105, is consumed by the brake chopper apparatus 107.

As described above, in trolley drive mode, if there is no load consuming power or storage system storing power beyond the overhead line 2, by the discharge of the brake chopper apparatus 107 as the current flowing in reactor 102 rises and the DC voltage of inverter 103 rises, the current flowing in reactor 102 can be suppressed below the current threshold Ith and the DC voltage of inverter 103 can be suppressed below the voltage threshold Vth2.

### < Third Embodiment>

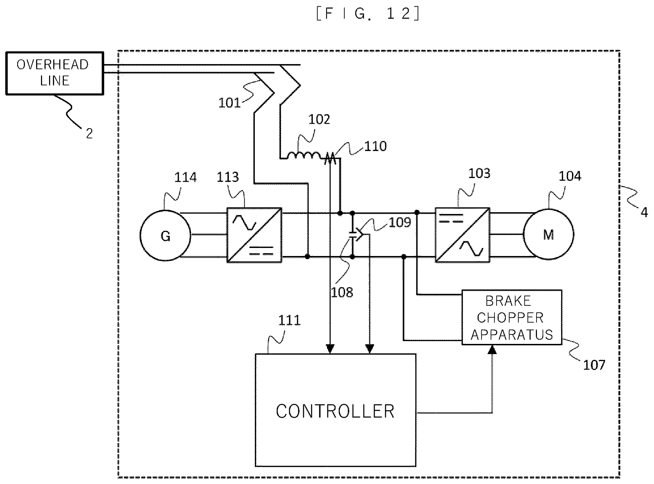

Next, the third embodiment is described. The same contents as those already described may be omitted. Figure 12 shows the configuration of the third embodiment of the electric drive vehicle. This embodiment includes an AC/DC converter 113 and a generator 114 instead of the DC/DC converter 105 and battery 106 in the configuration of the first embodiment shown in Figure 1, and otherwise has the same configuration. Note that, although not described in this embodiment, the electric generator 114 generates electricity by being driven by an engine or other means. In this configuration, as in the first embodiment, the reverse power flow to the overhead line 2 is suppressed when the electric drive vehicle 4 is connected to the overhead line 2 and the increase in DC voltage of the inverter 103 can be suppressed when the electric drive vehicle 4 is not connected to the overhead line 2,

### < Fourth embodiment>

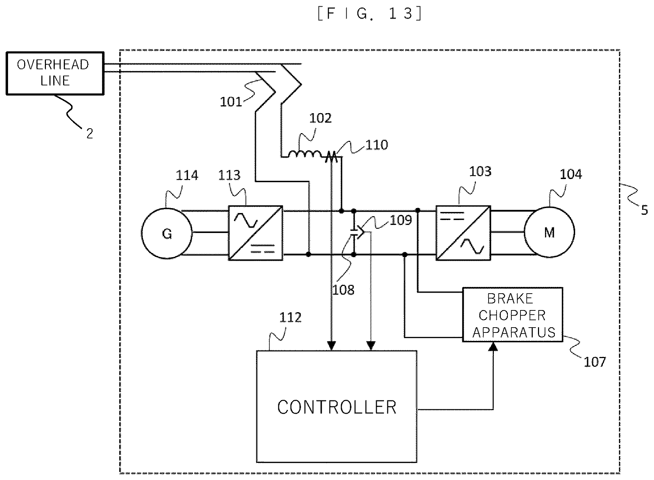

Next, the fourth embodiment is described. The same contents as those already described may be omitted. Figure 13 shows the configuration of the fourth embodiment of the electric drive vehicle. This embodiment includes an AC/DC converter 113 and an electric generator 114 instead of the DC/DC converter 105 and battery 106 in the configuration of the second embodiment shown in Figure 7, and otherwise has the same configuration. Note that, although not described in this embodiment, the electric generator 114 generates electricity by being driven by an engine or other means. In this configuration, as in the second embodiment, when the electric drive vehicle 5 is connected to the overhead line 2 and the voltage of the overhead line 2 increases, the reverse power flow to the overhead line 2 is suppressed, and when electric drive vehicle 5 is not connected to overhead line 2, the increase in DC voltage of inverter 103 can be suppressed.

### List of Reference Signs

1: electric drive vehicle
2: overhead line
101: pantograph
102: reactor
103: inverter
104: electric motor
105: DC/DC converter
106: battery
107: brake chopper apparatus
108: smoothing condenser
109: voltage sensor
110: current sensor
111: controller
1071: resistance
1072: diode
1073: switching element
1074: diode
1111: drive mode decider
1112: chopper controller
11121: subtractor
11122: duty ratio calculator
11123: subtractor
11124: duty ratio calculator
11125: output switcher
11126: PWM calculator
112: controller
1122: chopper controller
11221: comparator
11222: multiplier
113: AC/DC converter
114: electric generator

## Claims

1. An electric drive vehicle comprising:
a buttery;
a DC/DC converter that uses the output voltage of the battery as input;
an inverter that drives the electric motor using the voltage output from the DC/DC converter or the voltage output from the overhead line as input; and
a brake chopper apparatus including a switching element, a resistance, and a diode, which is connected to the DC side of the inverter, wherein
the electric drive vehicle
switches the conditions under which the switching element operates when the electric drive vehicle is connected to the overhead line and when the electric drive vehicle is not connected to the overhead line.

2. The electric drive vehicle according to claim 1, wherein
when the electric drive vehicle is connected to the overhead line, the switching element operates when the current flowing from the DC side of the inverter to the overhead line is equal to or greater than a predetermined value, and
when the electric drive vehicle is not connected to the overhead line, the switching element operates when the voltage on the DC side of the inverter is equal to or greater than a predetermined value.

3. The electric drive vehicle according to claim 1, wherein
when the electric drive vehicle is connected to the overhead line, the switching element operates when the current flowing from the DC side of the inverter to the overhead line is equal to or greater than a predetermined value and the voltage on the DC side of the inverter is equal to or greater than a predetermined value, and
when the electric drive vehicle is not connected to the overhead line, the switching element operates when the voltage on the DC side of the inverter is equal to or greater than a predetermined value.

4. An electric drive vehicle comprising:
an electric generator;
an AC/DC converter that uses the output voltage of the electric generator as input;
an inverter that drives the electric motor using the voltage output from the AC/DC converter or the voltage output from the overhead line as input; and
a brake chopper apparatus including a switching element, a resistance, and a diode, which is connected to the DC side of the inverter, wherein
the electric drive vehicle
switches the conditions under which the switching element operates when the electric drive vehicle is connected to the overhead line and when the electric drive vehicle is not connected to the overhead line.

5. The electric drive vehicle according to claim 4, wherein
when the electric drive vehicle is connected to the overhead line, the switching element operates when the current flowing from the DC side of the inverter to the overhead line is equal to or greater than a predetermined value, and
when the electric drive vehicle is not connected to the overhead line, the switching element operates when the voltage on the DC side of the inverter is equal to or greater than a predetermined value.

6. The electric drive vehicle according to claim 4, wherein
when the electric drive vehicle is connected to the overhead line, the switching element operates when the current flowing from the DC side of the inverter to the overhead line is equal to or greater than a predetermined value and the voltage on the DC side of the inverter is equal to or greater than a predetermined value, and
when the electric drive vehicle is not connected to the overhead line, the switching element operates when the voltage on the DC side of the inverter is equal to or greater than a predetermined value.
